# EUROPÄISCHE PATENTSCHRIFT

(11) **EP 0 759 130 B1**
(45) Veröffentlichungstag und Bekanntmachung des Hinweises auf die Patenterteilung: **12.08.1998**
(21) Anmeldenummer: 95919429.1
(22) Anmeldetag: 09.05.1995
(51) Int. Cl.: F16H 3/093

(54) **UNTER LAST SCHALTBARES, MEHRGÄNGIGES WENDEGETRIEBE**
MULTI-RATIO POWER-SHIFTABLE REVERSING GEAR
BOITE D'INVERSION A PLUSIEURS RAPPORTS COUPLABLE SOUS CHARGE

(30) Priorität: 13.05.1994 DE 4416929
(43) Veröffentlichungstag der Anmeldung: 26.02.1997
(73) Patentinhaber: ZF FRIEDRICHSHAFEN Aktiengesellschaft, 88038 Friedrichshafen (DE)
(72) Erfinder: LEBER, Fritz, D-88048 Friedrichshafen (DE); REBHOLZ, Wolfgang, D-88045 Friedrichshafen (DE)
(86) Internationale Anmeldenummer: EP9501748
(87) Internationale Veröffentlichungsnummer: WO9531655

(56) Entgegenhaltungen:
- DE-A- 2 535 700
- DE-A- 4 242 942
- DE-B- 1 129 838

## Beschreibung

Die Erfindung betrifft ein unter Last schaltbares, mehrgängiges Wendegetriebe mit einer Eingangswelle und Vorgelegewellen, einem Wendesatz sowie auf den Vorgelegewellen angeordneten Schaltkupplungen mit Losrädern, die zur Gang- und Richtungsschaltung wahlweise drehfest mit einer der Vorgelegewellen verbindbar sind sowie einem Abtriebsrädersatz mit einem Festrad auf einer Ausgangswelle.

Bei den heute im Einsatz befindlichen Baumaschinen kommen Getriebe zur Anwendung, die im wesentlichen in zwei Gruppen unterteilt werden können. Kennzeichnend für eine Gruppe ist, daß dem Lastschaltgetriebe eine hydrostatische Antriebseinheit vorgeschaltet ist. Die Drehzahl- und Drehmomentanpassung der Vorschaltgruppe wird bei diesen Getrieben über hydraulische bzw. elektro-hydraulische Steuerungen realisiert.

Die überwiegende Anzahl der eingesetzten Getriebe gehört zu der weiteren Gruppe der Lastschaltgetriebe mit vorgeschaltetem, hydrodynamischen Drehmomentwandler. Mit Hilfe dieser Antriebseinheit läßt sich eine stufenlose und selbsttätige Drehmomentsteigerung bei anwachsendem Arbeitswiderstand des Kraftfahrzeuges, beispielsweise einer Baumaschine, erreichen. Es können hierbei Getriebeantriebsmomente erzeugt werden, die etwa dem dreifachen Wert des Motordrehmomentes entsprechen. Dies ist deswegen von Bedeutung, da, anders als dies beim Pkw der Fall ist, mit dem Getriebe bzw. Wandler gearbeitet wird. Bei einem Radlader wird beispielsweise die Schaufel in aufzunehmendes Erdreich hineingedrückt. Die Füllung wird losgebrochen und angehoben. Zum Beladen wird das Fahrzeug reversiert, die Schaufel wird weiter angehoben und entladen. Die Drehmomentwandlung ist ein großer Vorteil gerade bei geringen Geschwindigkeiten und großen Drehzahldifferenzen zwischen dem An- und Abtrieb.

Der Wandler kann durch eine Wandlerüberbrückungskupplung ergänzt werden. Mit Hilfe dieser Kupplung lassen sich im Bereich höherer Drehzahlen innerhalb der Gänge erhebliche Verbrauchseinsparungen erreichen.

Der Kraftfluß in den einzelnen Gängen wird durch eine Kombination von hydraulisch schaltbaren Kupplungen hergestellt. Diese Kupplungen müssen unter anderem zum Reversieren unter Last schaltbar sein und nehmen daher viel Energie auf. Die Bauweise des Gehäuses bzw. die Anordnung der Wellen des Getriebes muß einer Anwendung spezifisch angepaßt sein. Typische Anwendungsfälle für ein Wendegetriebe sind der Einsatz in Dumpern, Radladern, Baggerladern und Staplern, aber auch bei Fahrzeugen, die auf der Straße betrieben werden, zum Beispiel bei Kranfahrzeugen. Je nach Fahrzeugtyp ist ein bestimmter Achsversatz zwischen der Einund Ausgangswelle des Getriebes erforderlich. Lange Achsabstände sind beispielsweise dann einzuhalten, wenn die Beugungswinkel von Gelenkwellen klein gehalten werden müssen. In diesem Fall übernimmt das Wendegetriebe eine zusätzliche Funktion als Verteilergetriebe.

Bei Staplern hat das Wendegetriebe lediglich eine Ausgangswelle. Wegen der räumlichen Verhältnisse ist ein geringer Achsabstand erforderlich.

In den meisten Fällen ist mindestens ein motordrehzahlabhängig getriebener Nebenabtrieb, zum Beispiel für die Hydraulik der Arbeitsmaschine, erforderlich. Im Strang zum Nebenabtrieb ist ferner eine Schmiermittel- und Schaltpumpe vorgesehen, die ebenfalls in Abhängigkeit von der Motordrehzahl betrieben wird.

Durch die Bauart der Fahrzeuge bedingt, sind die Aufgaben, die ein Wendegetriebe zu erfüllen hat, sehr unterschiedlich.

Aus der DE-A 11 29 838 ist ein Wendegetriebe bekannt, das sich durch eine geringe axiale Baulänge auszeichnet. Auf einer Antriebswelle befindet sich ein Festrad, das mit Festrädern auf einer Umkehrwelle und einer Vorgelegewelle ständig im Eingriff steht. Sämtliche Losräder liegen auf einer Seite des Getriebes und kämmen ständig miteinander. Zwischen den Los- und Festrädern ist jeweils eine Reibungskupplung angeordnet. Bei diesem bekannten Wendegetriebe gestaltet sich der konstruktive Aufbau der Reibungskupplungen, insbesondere die Anordnung der Lamellenpakete, die Lagerung der Losräder auf den Vorgelegewellen und auch die auf der Seite der Losräder mittelbare Lagerung der Vorgelegewelle selbst relativ aufwendig.

Aus der DE-A 25 35 700 ist ein Wendegetriebe bekanntgeworden, bei dem die Reibungskupplungen als Doppelkupplungen ausgebildet sind. Bei diesem Getriebe läßt sich eine relativ hohe Gangzahl realisieren, jedoch ist in Axialrichtung ein größerer Bauraum erforderlich, da auf einer Vorgelegewelle bis zu vier Zahnräder und eine Doppelkupplung unterzubringen sind.

Der vorliegenden Erfindung liegt die Aufgabe zugrunde, ein lastschaltbares Wendegetriebe mit einer geringen axialen Baulänge hinsichtlich der Ausbildung der Reibungskupplungen und der Lagerung der Vorgelegewellen zu verbessern.

Die der Erfindung zugrunde liegende Aufgabe wird dadurch gelöst, daß der Wendesatz aus einem Festrad der Eingangswelle und auf den Vorgelegewellen gelagerten Losrädern gebildet wird, daß Festräder der Vorgelegewelle und ein auf der Ausgangswelle angeordnetes Losrad eine Antriebsräderkette bilden und daß der Abtriebsrädersatz aus einem Festrad der Ausgangswelle und einem auf der Vorgelegewelle gelagerten Losrad gebildet wird. Das vorgeschlagene Wendegetriebe zeichnet sich durch eine Reihe von Vorteilen aus. Die Losräder sind so angeordnet, daß sie unter Last nicht mit einer Relativdrehzahl, in bezug auf ihre Vorgelegewellen, umlaufen. Auch werden diese Losräder nicht als Zwischenräder eingesetzt, so daß sie nicht mit der hohen Last aus zwei Zahneingriffen beaufschlagt werden. Daher können die Wälzlager, von denen mindestens eines unterhalb eines Lamellenpaketes einer Schaltkupplung angeordnet ist, klein dimensioniert werden. Die Losräder laufen nur unter Last, wenn bei geschlossener Schaltkupplung die Relativdrehzahl zwischen diesem Losrad und seiner Vorgelegewelle gleich Null ist. Sofern ein Zwischenrad erforderlich ist, wird dies durch ein Festrad gebildet. Das Getriebe zeichnet sich durch eine kompakte Bauweise aus. Für die Lagerung einer Vorgelegewelle sind insgesamt vier Wälzlager vorgesehen, von denen zwei vergleichsweise klein dimensioniert sind. Neben einer geringen Durchbiegung der Vorgelegewelle ist dadurch eine Kostenersparnis zu verzeichnen.

Es ist vorteilhaft, das der Schaltkupplung für den ersten Gang zugeordnete Zahnrad als Losrad auszubilden. Dieses Losrad läuft zwar mit einer relativ hohen Drehzahl um, jedoch erlaubt es eine vorteilhafte Zuordnung der Schaltkupplung. Es kämmt mit einem Festrad auf der Ausgangswelle. Auch dieses Festrad ist schrägverzahnt. Für seine Abstützung steht eine große Lagerbasis zur Verfügung, so daß auftretende Kippkräfte ohne weiteres aufgenommen werden.

Auch das Zahnrad, das über eine Schaltkupplung für den zweiten Gang drehfest mit der Ausgangswelle verbindbar ist, ist als Losrad ausgebildet. Auch hier gelten prinzipiell die vorstehend erläuterten Vorteile.

Eine besonders günstige Anordnung der Schaltkupplungen ist gegeben, wenn die Innenlamellen der Lamellenpakete mit den Losrädern verbunden sind, während die Außenlamellen der Lamellenpakete in Kupplungsgehäusen aufgenommen sind, die Bestandteil der Vorgelegewellen sind. Die Zahnräder, die mit relativ hohen Drehzahlen umlaufen, sind somit als Losräder ausgebildet. Sie sind nicht drehfest mit dem Kolbenraum der hydraulischen Betätigung und mit dem Außenlamellenträger verbunden. Mit dieser Anordnung läßt sich eine hohe Schaltqualität erreichen. Die Gefahr des Auftretens von Lamellentaumeln ist gering. Um eine möglichst große Lagerbasis für die Lagerung der Losräder bei einer kompakten Bauweise zu erreichen, ist es besonders vorteilhaft, wenn jedes Losrad über zwei Wälzlager auf seiner Vorgelegewelle gelagert ist. Ein Wälzlager ist unterhalb und etwa mittig zu einem Lamellenpaket angeordnet, während das weitere Wälzlager etwa in der Vertikalebene des Zahneingriffs liegt.

Um die großen Beschleunigungen von der hydraulischen Betätigung der Schaltkupplungen fernzuhalten, ist je ein Kolben in einem Ringraum des Kupplungsgehäuses verschiebbar gelagert. Das Kupplungsgehäuse ist drehfest mit der jeweiligen Vorgelegewelle verbunden. Der Kolben ist über Dichtungen, zum Beispiel O-Ringe, im Ringraum dichtend geführt.

Um die Losräder von hohen Belastungen fernzuhalten, laufen sie unter Last nicht relativ zu ihren Vorgelegewellen um. Für die Belastung ist es vorteilhaft, daß die Losräder nicht als Zwischenräder eingesetzt werden und demnach nur mit einem Zahneingriff umlaufen.

Weitere, für die Erfindung wesentliche Merkmale sowie die daraus resultierenden Vorteile sind der nachfolgenden Beschreibung eines Ausführungsbeispieles zu entnehmen. Es zeigen:
- Fig. 1: ein zweigängiges Wendegetriebe, dargestellt als Getriebeschema;
- Fig. 2: einen Längsschnitt durch eine Schaltkupplung des Wendegetriebes nach Fig. 1.

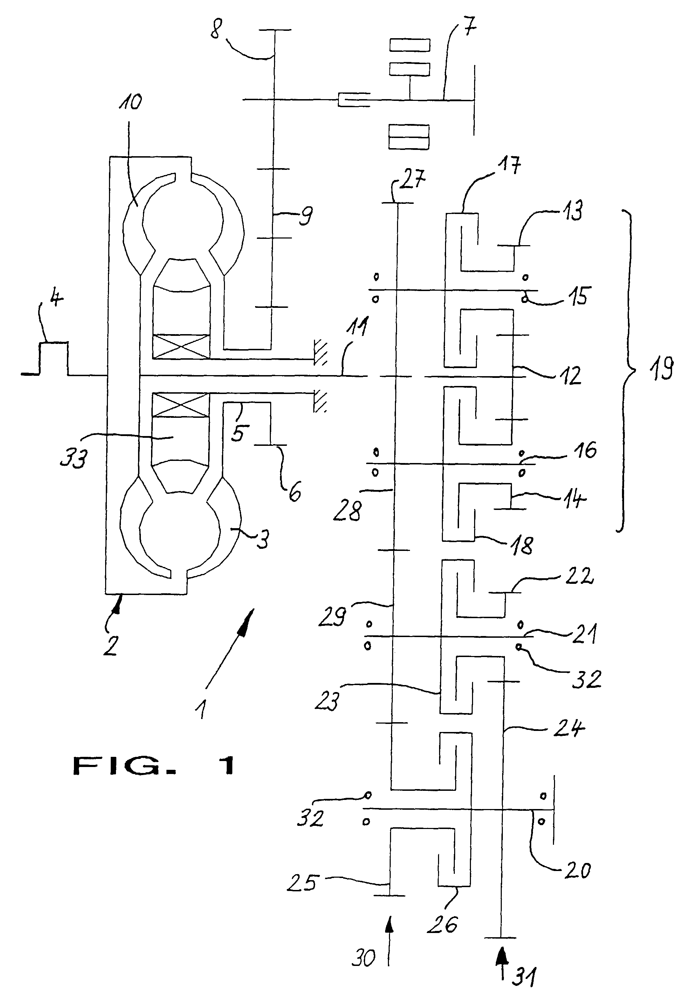

In Fig. 1 ist ein Getriebeschema eines lastschaltbaren Wendegetriebes 1 abgebildet. Es handelt sich um ein zweigängiges Wendegetriebe, dem ein hydrodynamischer Drehmomentwandler 2 vorgeschaltet sein kann, was vorzugsweise bei schweren Baufahrzeugen der Fall sein wird.

Ein Pumpenrad 3 des hydrodynamischen Drehmomentwandlers steht mit einem schematisch angedeuteten Motor 4 in Antriebsverbindung. Auf einer Abtriebswelle 5 des Pumpenrades 3 ist drehfest ein Zahnrad 6 angeordnet. Dieses steht mit einem auf einer Vorgelegewelle 7 ebenfalls drehfest angeordneten Zahnrad 8 in kämmender Antriebsverbindung, wie dies durch die gestrichelte Verbindung 9 angedeutet ist. Die Zahnräder 6 und 8 und die Vorgelegewelle 7 bilden einen Nebenabtrieb, mit dem beispielsweise eine Ölpumpe oder eine Zapfwelle motordrehzahlabhängig betrieben werden kann.

Das Turbinenrad 10 des hydrodynamischen Drehmomentwandlers ist drehfest mit einer Eingangswelle 11 verbunden. Am in der Zeichnung rechts liegenden Ende der durchgehenden Eingangswelle 11 (aus Gründen der Übersichtlichkeit ist die Eingangswelle 11 in der Zeichnung unterbrochen dargestellt) ist ein Festrad 12 angeordnet. Das Festrad 12 steht mit Losrädern 13 und 14 in kämmender Antriebsverbindung. Die Losräder 13 und 14 sind jeweils auf einer Vorgelegewelle 15 und 16 gelagert.

Das Losrad 13 kann über eine Schaltkupplung 17 und das Losrad 14 kann über eine Schaltkupplung 18 drehfest mit der Vorgelegewelle 15 bzw. der Vorgelegewelle 16 verbunden werden. Durch das Festrad 12 und die wahlweise drehfest mit den Vorgelegewellen 15 bzw. 16 verbindbaren Losräder 13 und 14 wird ein Wendesatz 19 gebildet.

Der Wendesatz 19 erlaubt in Verbindung mit den Schaltkupplungen 17 und 18 eine Umkehr der Drehrichtung einer Ausgangswelle 20 des Wendegetriebes. Aus diesem Grunde werden die Schaltkupplungen 17 und 18 auch als Richtungskupplungen bezeichnet.

Der hydrodynamische Drehmomentwandler 2 wird durch ein Leitrad 33 vervollständigt, das über einen Freilauf abgestützt ist.

Das Wendegetriebe in Vorgelegewellenbauart weist neben den Vorgelegewellen 15 und 16 sowie der Ausgangswelle 20 eine weitere Vorgelegewelle 21 auf. Auf dieser Vorgelegewelle ist ein Losrad 22 drehbar gelagert, das über eine Schaltkupplung 23 drehfest mit der Vorgelegewelle 21 verbindbar ist. Bei der Schaltkupplung 23 handelt es sich um die Gangschaltkupplung für den ersten Gang.

Das Losrad 22 steht in ständigem Zahneingriff mit einem Festrad 24 der Ausgangswelle 20 des Wendegetriebes 1.

Auf der Ausgangswelle 20 ist schließlich noch ein Losrad 25 drehbar gelagert, das durch eine Schaltkupplung 26 drehfest mit der Ausgangswelle 20 gekoppelt werden kann. Die Schaltkupplung 26 bildet die Gangschaltkupplung für den zweiten Gang.

Die Anordnung wird vervollständigt durch Festräder 27, 28 und 29. Das Festrad 27 ist mit der Vorgelegewelle 15, das Festrad 28 mit der Vorgelegewelle 16 und das Festrad 29 mit der Vorgelegewelle 21 drehfest verbunden.

Das Festrad 29 steht in kämmender Verbindung mit dem Losrad 25. Die Festräder 27, 28 und 29 sowie das Losrad 25 bilden eine Antriebsräderkette 30. Das Losrad 22 und das Festrad 24 bilden einen Abtriebsrädersatz 31.

Im geschalteten ersten Gang fließt die Leistung über die Vorgelegewelle 21 und das Losrad 22 (bei geschlossener Schaltkupplung 23) auf das Festrad 24 der Ausgangswelle 20. Hierbei ist eine der Schaltkupplungen 17 oder 18 in Fahrtrichtung Vorwärts bzw. Fahrtrichtung Rückwärts geschlossen. Die Gangschaltkupplung für den zweiten Gang (Schaltkupplung 26) ist geöffnet.

Bei geschaltetem zweiten Gang ist die Schaltkupplung 23 geöffnet, während die Schaltkupplung 26 geschlossen ist. Die Antriebsleistung fließt über die Antriebsräderkette 30 auf die Ausgangswelle 20.

Mit dem Wendegetriebe 1 lassen sich demnach zwei Vorwärts- und zwei Rückwärtsgänge schalten. Es liegen folgende Verhältnisse vor:

| Gang | Schaltkupplung | Übersetzung | Sprung |
|---|---|---|---|
| 1, vorwärts | 17 und 23 | 2,440 | 2,435 |
| 2, vorwärt | 17 und 26 | 1,002 | |
| 1, rückwärts | 18 und 23 | 2,483 | 2,435 |
| 2, rückwärts | 18 und 26 | 1,020 | |

Das vorstehend erläuterte Getriebeschema zeigt, daß auf jeder der Vorgelegewellen 15, 16, 20 und 21 jeweils eine einzige Schaltkupplung 17 bzw. 18 bzw. 23 bzw. 26, ein einziges Losrad 13, 14, 22 und 25 und ein einziges Festrad 27, 28, 29 und 24 angeordnet ist. Durch die begrenzte Anzahl der Bauelemente ergibt sich eine sehr kurze axiale Baulänge jeder der Vorgelegewellen 15, 16, 20 und 21. Die Vorgelegewellen 15, 16, 20 und 21 sind jeweils über zwei Wälzlager 32 gelagert.

Die Schaltkupplungen 17, 18, 23 und 26 sind zwischen den jeweiligen Los- und Festrädern in einer gemeinsamen Vertikalebene liegend angeordnet. Auch diese Maßnahme trägt wesentlich zur kurzen axialen Baulänge des Wendegetriebes bei.

Um niedrige Geräuschpegel zu erzielen, sind die Los- und Festräder 13, 14, 22, 25 bzw. 27, 28 und 29 schrägverzahnt. Vorzugsweise werden Verzahnungen mit großen Schrägungswinkeln eingesetzt. Durch die axial kurze Bauweise der Vorgelegewellen ergeben sich keine großen Biegelasten.

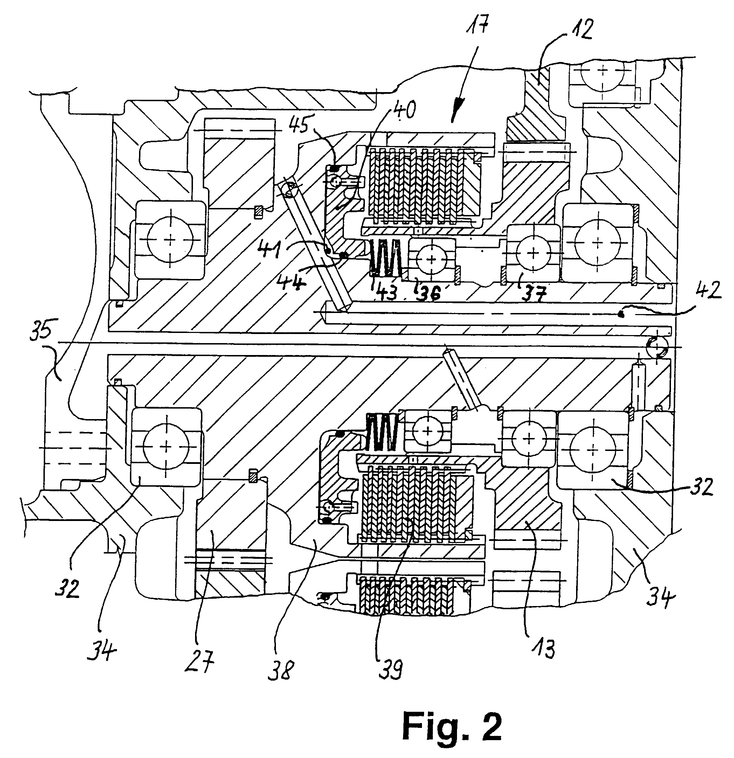

In Fig. 2 ist eine Einzelheit des Wendegetriebes 1 nach Fig. 1 dargestellt. Zu sehen ist die in dem Getriebeschema nach Fig. 1 oben liegende Schaltkupplung 17 (Richtungskupplung vorwärts). Das Festrad 12 der Eingangswelle 11 ist teilweise zu sehen. Die Vorgelegewelle 15 ist über die Wälzlager 32 in einem Getriebegehäuse 34 gelagert. Im Bereich des lediglich angedeuteten Pumpenrades 3 ist das Getriebegehäuse 34 durch einen Deckel 35 geschlossen.

Das Losrad 13 ist über zwei Wälzlager 36 und 37 auf der Vorgelegewelle 15 drehbar gelagert. Beide Lager, insbesondere jedoch das Wälzlager 36, sind klein dimensioniert.

Das Wälzlager 36 liegt unterhalb und mittig zu einem Lamellenpaket 39. Das Wälzlager 37 stützt das Losrad 13 in der Vertikalebene, in der seine Verzahnung liegt.

Ein Kupplungsgehäuse 38 der Schaltkupplung 17 ist Bestandteil der Vorgelegewelle 15 und Träger von Außenlamellen eines Lamellenpaketes 39. Die Innenlamellen dieses Lamellenpaketes werden von einem Lamellenträger des Hohlrades 13 getragen. Das Lamellenpaket 39 kann in an sich bekannter Weise durch einen hydraulisch betätigbaren Kolben 40 im Schließsinne beaufschlagt werden. Zur Betätigung ist an einen Ringraum 41 zur Ölzufuhr ein Kanal 42 herangeführt.

Bei drucklosem Ringraum 41 wird der Kolben 40 durch Federn 43 in die dargestellte Ausgangslage überführt.

Zur Abdichtung des Kolbens 40 gegenüber dem Kupplungsgehäuse 38 wird ein innerer und ein äußerer O-Ring 44 und 45 eingesetzt.

Der Aufbau der übrigen Schaltkupplungen und die Lagerung der übrigen Losräder entsprechen der erläuterten Bauweise.

Wie oben ausgeführt, wird die Antriebsräderkette 30 aus den Festrädern 27, 28 und 29 gebildet. Das der Gangschaltkupplung für den zweiten Gang (Schaltkupplung 26) zugeordnete Zahnrad ist als Losrad 25 ausgebildet, das mit dem Festrad 29 in Eingriff steht. Das der Gangschaltkupplung für den ersten Gang (Schaltkupplung 23) zugeordnete Losrad 22 kämmt mit dem großen Festrad 24 der Ausgangswelle 20.

Die Losräder 13 und 14 und 22 und 25 sind in vorteilhafter Weise so angeordnet, daß sie unter Last nicht mit einer Relativdrehzahl in bezug auf die Vorgelegewellen, auf denen sie gelagert sind, umlaufen. Auch werden diese Losräder nicht als Zwischenräder eingesetzt, so daß sie nicht zudem mit der hohen Last aus zwei Zahneingriffen beaufschlagt werden. Daher können die Wälzlager, von denen mindestens eines unter dem Lamellenpaket der zugehörigen Schaltkupplung angeordnet ist, klein dimensioniert werden. Diese Losräder laufen dabei nur unter Last, wenn die Relativdrehzahl zwischen einem der Losräder und der zugehörigen Vorgelegewelle gleich Null ist. Dies ist dann der Fall, wenn die zugehörige Schaltkupplung geschlossen ist. Sofern ein Zwischenrad erforderlich ist, wird dies durch ein Festrad gebildet, wie dies beispielsweise beim Festrad 29 und geschaltetem zweiten Gang der Fall ist. Der Vorteil von kleiner dimensionierten Wälzlagern zur Lagerung der Losräder hat weitere vorteilhafte Auswirkungen in der Weise, daß die unter Last drehende Vorgelegewelle über die Wälzlager 32 im Getriebegehäuse 34 gelagert werden kann. Hier ist der Einbauraum nicht begrenzt. In der Summe bedeutet dies eine kompakte Bauweise, eine Kostenersparnis an zwei der insgesamt vier erforderlichen Lager für eine Vorgelegewelle und eine geringere Durchbiegung der Vorgelegewelle.

Die Antriebsräderkette 30 ist mit dem Turbinenrad 10 des hydrodynamischen Wandlers 2 gekoppelt und wird demzufolge zusammen mit dem Turbinenrad beschleunigt bzw. verzögert. Bei einer Reversierschaltung ist die Beschleunigung der Antriebsräderkette 30 mit dem Turbinenrad sehr stark. Die Kupplungsgehäuse (zum Beispiel Kupplungsgehäuse 38 der Schaltkupplung 17) einschließlich der Kolben (zum Beispiel 40 der Schaltkupplung 17) sollen aus folgenden Gründen von dieser Beschleunigung nicht betroffen sein: wird die Beschleunigung des Kolbens durch die Reibung der O-Ringe 44 und 45 vorgenommen, wird zwar ein zusätzliches Mitnahmeprofil gespart, jedoch besteht die Gefahr, daß die O-Ringe relativ schnell verschleißen, da sich der Kolben im Kupplungsgehäuse dreht, bis er auf die neue Drehrichtung bzw. Drehzahl des Kupplungsgehäuses beschleunigt bzw. abgebremst ist. Um diese Nachteile zu vermeiden, wird eine Anordnung wie folgt vorgeschlagen:

Wie aus dem Getriebeschema nach Fig. 1 ersichtlich, sind die mit der Turbine verbundenen Zahnräder als Losräder auf den Vorgelegewellen gelagert. Hierdurch kann das vorstehend erläuterte - einfache Konstruktionsprinzip der Mitnahme des Kolbens über die beiden O-Ringe - verwirklicht werden, ohne dabei die hier geschilderten Nachteile in Kauf nehmen zu müssen. Die Gesamtmasse der stark beschleunigten Bauteile ist vergleichbar klein, wodurch das Auftreten großer resultierender Kräfte vermieden wird.

Der Übersetzungssprung zwischen dem ersten und zweiten Gang wird durch den Abtriebsrädersatz 31 realisiert. Das der Gangschaltkupplung für den ersten Gang zugeordnete Losrad 22 dreht sich bei geschaltetem zweiten Gang (Schaltkupplung 26 geschlossen) mit relativ hoher Drehzahl. Die Wahl dieses Zahnrades des Abtriebsrädersatzes als Losrad hat den Vorteil, daß es nicht mit dem Kupplungsgehäuse (Kolbenraum) der Schaltkupplung 23 und damit mit den Trägern der Außenlamellen des Lamellenpaketes verbunden ist. Dadurch werden diese Bauteile auch nicht mit der hohen Drehzahl des Losrades 22 bei geschaltetem zweiten Gang belegt.

Beim Schließen der Schaltkupplungen wird die Anpreßkraft des jeweiligen Kolbens auf das Lamellenpaket durch den hydraulischen Druck im Ringraum bestimmt. Um einen langsamen Aufbau des Drehmomentes zu erhalten, wird dieser Druck präzise gesteuert. Durch die Rotation des Drucköles im Kolbenringraum wird dieser gesteuerte Druck durch den Rotationsdruck überlagert. Um diesen ungünstigen Einfluß auf die Qualität der Schaltung klein zu halten, sollte die Drehzahl des Kupplungsgehäuses so klein wie möglich gehalten sein. Hinzu kommt, daß die Außenlamellen des Lamellenpaketes bezüglich eines Lamellentaumelns anfälliger sind als die zugehörigen Innenlamellen. Auch deshalb sollte die Drehzahl des Kupplungsgehäuses (als Träger der Außenlamellen) niedrig sein.

Aus den vorstehend genannten Gründen sind die Zahnräder, die mit relativ hohen Drehzahlen belegt werden, als Losräder ausgebildet. Sie sind nicht drehfest mit dem Kupplungsgehäuse und damit mit dem jeweiligen Ringraum (Kolbenraum) und dem entsprechenden Träger der Außenlamellen drehfest verbunden. Trotz der relativ einfachen Bauweise lassen sich mit dem vorgeschlagenen Wendegetriebe die gestellten Anforderungen an eine hohe Schaltqualität erfüllen. Die Gefahr des Auftretens von Lamellentaumeln wird klein gehalten.

Im Gegensatz zur Vorgelegewelle 21, bei der das zum Abtriebsrädersatz 31 zählende Zahnrad das Losrad 22 ist, ist bei der Ausgangswelle 20 das Abtriebsrad das Festrad 24.

Die sozusagen vertauschte Anordnung des Losrades 25 und des Festrades 24 der Ausgangswelle 20 ist nicht, wie man zunächst vermuten könnte, nachteilig, sondern mit folgenden Vorteilen verbunden: Bei dem relativ großen Durchmesser des Festrades 24 werden die Kippmomente, resultierend aus der wegen der geringeren Geräuschentwicklung gewählten Schrägverzahnung, groß. Bei der gewählten wellenfesten Bauweise wird die Lagerbasis für das Festrad 24 groß. Damit können diese Kippmomente sehr gut abgestützt werden. Die Verbindung dieses Festrades 24 mit dem Abtriebsflansch der Ausgangswelle läßt sich konstruktiv einfacher gestalten, als dies bei einem Losrad der Fall wäre. Aus diesen Gründen sind die Schaltkupplungen 23 und 26, wie beschrieben, über Kreuz angeordnet.

### Bezugszeichen

- 1: Wendegetriebe
- 2: Drehmomentwandler
- 3: Pumpenrad
- 4: Motor
- 5: Abtriebswelle
- 6: Zahnrad
- 7: Vorgelegewelle
- 8: Zahnrad
- 9: Verbindung
- 10: Turbinenrad
- 11: Eingangswelle
- 12: Festrad
- 13: Losrad
- 14: Losrad
- 15: Vorgelegewelle
- 16: Vorgelegewelle
- 17: Schaltkupplung
- 18: Schaltkupplung
- 19: Wendesatz
- 20: Ausgangswelle
- 21: Vorgelegewelle
- 22: Losrad
- 23: Schaltkupplung
- 24: Festrad
- 25: Losrad
- 26: Schaltkupplung
- 27: Festrad
- 28: Festrad
- 29: Festrad
- 30: Antriebsräderkette
- 31: Abtriebsrädersatz
- 32: Wälzlager
- 33: Wälzlager
- 34: Getriebegehäuse
- 35: Deckel
- 36: Wälzlager
- 37: Wälzlager
- 38: Kupplungsgehäuse
- 39: Lamellenpaket
- 40: Kolben
- 41: Ringraum
- 42: Kanal
- 43: Feder
- 44: O-Ring
- 45: O-Ring

## Patentansprüche

1. Unter Last schaltbares, mehrgängiges Wendegetriebe (1) mit einer Eingangswelle (2) und Vorgelegewellen (15, 16, 20 und 21), einem Wendesatz (19) sowie auf den Vorgelegewellen (15, 16, 20 und 21) angeordneten Schaltkupplungen (17, 18, 23 und 26) mit Losrädern (13, 14, 22 und 25), die zur Gang- und Richtungsschaltung wahlweise drehfest mit einer der Vorgelegewellen (15, 16, 20 und 21) verbindbar sind sowie einem Abtriebsrädersatz (31) mit einem Festrad (24) auf einer Ausgangswelle (20), dadurch **gekennzeichnet,** daß der Wendesatz (19) aus einem Festrad (12) der Eingangswelle (11) und auf den Vorgelegewellen (15, 16) gelagerten Losrädern (13, 14) gebildet wird, daß Festräder (27, 28 und 29) der Vorgelegewellen (15, 16 und 21) und ein auf der Ausgangswelle (20) angeordnetes Losrad (25) eine Antriebsräderkette (30) bilden und daß der Abtriebsrädersatz aus dem Festrad (24) der Ausgangswelle (20) und einem auf der Vorgelegewelle (21) gelagerten Losrad (22) gebildet wird.

2. Getriebe nach Anspruch 1, dadurch **gekennzeichnet**, daß das Losrad (22) über eine Schaltkupplung (23) für den ersten Gang drehfest mit der Vorgelegewelle (21) verbindbar ist.

3. Getriebe nach den Ansprüchen 1 und 2, dadurch **gekennzeichnet,** daß das Losrad (25) über eine Schaltkupplung (26) für den zweiten Gang drehfest mit der Ausgangswelle (20) verbindbar ist.

4. Getriebe nach Anspruch 1, dadurch **gekennzeichnet**, daß die Innenlamellen der Lamellenpakete (39) der Schaltkupplungen (17, 18, 23 und 25) mit den Losrädern (13, 14, 22 und 25) verbunden sind, während die Außenlamellen der Lamellenpakete (39) in Kupplungsgehäusen (38), die Bestandteil der Vorgelegewellen (15, 16, 20 und 21) sind, aufgenommen sind.

5. Getriebe nach Anspruch 4, dadurch **gekennzeichnet,** daß jedes Losrad (13, 14, 22 und 25) über zwei Wälzlager auf seiner Vorgelegewelle (15, 16, 20 und 21) gelagert ist, wobei ein Wälzlager (36) unterhalb und etwa mittig zu einem Lamellenpaket (39) angeordnet ist und daß weitere Wälzlager (37) etwa in der Vertikalebene des Losrades (13, 14, 22 oder 25) liegen, bezogen auf den Längsquerschnitt durch eine Schaltkupplung (17, 18, 23 oder 25).

6. Getriebe nach Anspruch 5, dadurch **gekennzeichnet**, daß zur Betätigung der Schaltkupplungen (17, 18, 23 und 25) je ein Kolben (40) in einem Ringraum (41) des Kupplungsgehäuses (38), das Bestandteil der jeweiligen Vorgelegewelle (15, 16, 20 und 21) ist, verschiebbar gelagert ist und daß der Kolben (40) über Dichtungen (44, 45) im Ringraum (41) dichtend geführt ist.

7. Getriebe nach Anspruch 1, dadurch **gekennzeichnet**, daß das auf der Ausgangswelle (20) angeordnete Festrad (24) schrägverzahnt ist.

8. Getriebe nach Anspruch 1, dadurch **gekennzeichnet,** daß die Losräder (13, 14, 22 und 25) unter Last nicht mit einer Relativdrehzahl zu ihren Vorgelegewellen (15, 16, 21 und 20) umlaufen.

9. Getriebe nach Anspruch 1, dadurch **gekennzeichnet**, daß die Losräder (13, 14, 22 und 25) mit einem Zahneingriff umlaufen.

10. Getriebe nach Anspruch 1, dadurch **gekennzeichnet,** daß die Schaltkupplungen (17, 18, 23 und 26) zwischen jeweils einem Los- und Festrad (13 und 27 bzw. 14 und 28 bzw. 22 und 29 bzw. 24 und 25) und in einer gemeinsamen Vertikalebene liegen, bezogen auf den Längsquerschnitt durch das Getriebe.

## Claims

1. Power shiftable multi-speed reversing transmission (1) having an input shaft (2) and layshafts (15, 16, 20 and 21), a reversing set (19) as well as, disposed on the layshafts (15, 16, 20 and 21), clutches (17, 18, 23 and 26) with idler wheels (13, 14, 22 and 25) which, for shifting gear and direction, are selectively connectable non-rotatably to one of the layshafts (15, 16, 20 and 21), as well as having a driven wheel set (31) with a fixed wheel (24) on an output shaft (20), characterized in that the reversing set (19) is formed by a fixed wheel (12) of the input shaft (11) and idler wheels (13, 14) mounted on the layshafts (15, 16), that fixed wheels (27, 28 and 29) of the layshafts (15, 16 and 21) and an idler wheel (25) disposed on the output shaft (20) form a driving wheel system (30) and that the driven wheel set is formed by the fixed wheel (24) of the output shaft (20) and an idler wheel (22) mounted on the layshaft (21).

2. Transmission according to claim 1, characterized in that the idler wheel (22) is connectable non-rotatably to the layshaft (21) by a clutch (23) for first gear.

3. Transmission according to claims 1 and 2, characterized in that the idler wheel (25) is connectable non-rotatably to the output shaft (20) by a clutch (26) for second gear.

4. Transmission according to claim 1, characterized in that the inner discs of the disc assemblies (39) of the clutches (17, 18, 23 and 25) are connected to the idler wheels (13, 14, 22 and 25), while the outer discs of the disc assemblies (39) are accommodated in clutch housings (38), which are a component part of the layshafts (15, 16, 20 and 21).

5. Transmission according to claim 4, characterized in that each idler wheel (13, 14, 22 and 25) is mounted by means of two rolling-contact bearings on its layshaft (15, 16, 20 and 21), one rolling-contact bearing (36) being disposed underneath and substantially centrally relative to a disc assembly (39), and that further rolling-contact bearings (37) lie substantially in the vertical plane of the idler wheel (13, 14, 22 or 25) in relation to the longitudinal cross section through a clutch (17, 18, 23 or 25).

6. Transmission according to claim 5, characterized in that, for operation of each of the clutches (17, 18, 23 and 25), a piston (40) is displaceably supported in an annular space (41) of the clutch housing (38), which is a component part of the respective layshaft (15, 16, 20 and 21), and that the piston (40) is guided sealingly by means of seals (44, 45) in the annular space (41).

7. Transmission according to claim 1, characterized in that the fixed wheel (24) disposed on the output shaft (20) is a helical gear wheel.

8. Transmission according to claim 1, characterized in that the idler wheels (13, 14, 22 and 25) under load do not rotate at a relative speed to their layshafts (15, 16, 21 and 20).

9. Transmission according to claim 1, characterized in that the idler wheels (13, 14, 22 and 25) rotate by means of a meshing.

10. Transmission according to claim 1, characterized in that the clutches (17, 18, 23 and 26) lie between in each case an idler and fixed wheel (13 and 27 or 14 and 28 or 22 and 29 or 24 and 25) and in a common vertical plane in relation to the longitudinal cross section through the transmission.

## Revendications

1. Transmission réversible (1) à engrenages multiples manoeuvrable en charge comportant un arbre d'entrée (2) et des arbres de renvoi (15, 16, 20 et 21) un bloc d'inversion (19) ainsi que des embrayages (17, 18, 23 et 26) agencés sur les arbres de renvoi (15, 16, 20 et 21), avec des roues mobiles (13, 14, 22 et 25) et pouvant être reliées pour le changement de vitesse et le renversement directionnel au choix avec un des arbres de renvoi (15, 16, 20 et 21), ainsi qu'un jeu de roues de sortie (31) ayant une roue fixe (24) sur un arbre de sortie (20),
**caractérisée** en ce que le bloc d'inversion (19) se compose d'une roue fixe (12), d'un arbre entrée (11) et de roues mobiles (13, 14) agencées sur les arbres de renvoi (15, 16), en ce que des roues fixes (27, 28 et 29) des arbres de renvoi (15, 16 et 21) et une roue mobile (25) agencée sur l'arbre de sortie (20) forment une chaîne de roues motrices (30) et en ce que le jeu des roues de sortie est formé par une roue fixe (24), l'arbre de sortie (20) et une roue mobile (22) agencée sur l'arbre de renvoi (21)

2. Transmission selon la revendication 1, **caractérisée** en ce que la roue mobile (22) peut être reliée de manière non-rotative par l'intermédiaire d'un embrayage (23) pour la première vitesse à l'arbre de renvoi (21).

3. Transmission selon les revendications 1 et 2, **caractérisée** en ce que la roue mobile (25) peut être reliée pour la deuxième vitesse de manière non-rotative, par l'intermédiaire d'un embrayage (26), à l'arbre de sortie (20).

4. Transmission selon la revendication 1, **caractérisée** en ce que les disques intérieurs des blocs de disques (39) des embrayages (17, 18, 23 et 25) sont reliés aux roues mobiles (13, 14, 22 et 25) tandis que les disques extérieurs des blocs de disques (39) sont logés dans des carters d'embrayage (38) qui font partie des arbres de renvoi (15, 16, 20 et 21).

5. Transmission selon revendication 4, **caractérisée** en ce que chaque roue mobile (13, 14, 22 et 25) est montée par l'intermédiaire de deux paliers à roulement, sur son arbre de renvoi (15, 16, 20 et 21), un arbre de renvoi (36) étant disposé en dessous et à peu près au centre par rapport à un bloc de disques (39), et en ce que d'autres paliers à roulement (37) se trouvent à peu près dans le plan horizontal de la roue mobile (13, 14, 22 ou 25) par rapport à la coupe longitudinale à travers un embrayage (17, 18, 23 ou 25).

6. Transmission selon revendication 5, **caractérisée** en ce que, pour l'actionnement de chaque embrayage (17, 18, 23 et 25), un piston (40) est monté de façon coulissante dans un espace annulaire (41) du carter d'embrayage (38) qui fait partie de l'arbre de renvoi concerné (15, 16, 20 et 21) et en ce que le piston (40) est guidé de manière étanche dans l'espace annulaire (41) par l'intermédiaire de joints d'étanchéité (44, 45).

7. Transmission selon revendication 1, **caractérisée** en ce que la roue fixe (24) agencée sur l'arbre de sortie (20) a une denture hélicoïdale

8. Transmission selon revendication 1, **caractérisée** en ce que les roues mobiles (13, 14, 22 et 25) ne tournent pas en charge à une vitesse relative par rapport à leur arbre de renvoi correspondant (15, 16, 21 et 20).

9. Transmission selon revendication 1, **caractérisée** en ce que les roues mobiles (13, 14, 22 et 25) tournent avec une engrenure.

10. Transmission selon revendication 1, **caractérisée** en ce que les embrayages (17, 18, 23 et 26) sont situés chacun entre une roue mobile et une roue fixe (13 et 27, respectivement 14 et 28, respectivement 22 et 29, respectivement 24 et 25) et dans un plan vertical commun par rapport à la coupe longitudinale à travers l'engrenage.
